# FASCICULE DE BREVET EUROPEEN

(11) **EP 3 467 612 B1**
(45) Date de publication et mention de la délivrance du brevet: **16.09.2020**
(21) Numéro de dépôt: 18199144.9
(22) Date de dépôt: 08.10.2018
(51) Int. Cl.: G05G 1/04, G05G 5/03, G05G 7/02, G05G 9/047, B64C 13/04, B64C 27/56, B64D 31/04, B63H 21/21

(54) **DISPOSITIF DE GÉNÉRATION, PAR FRICTION, DE SENSATION D'EFFORTS POUR UN SYSTÈME DE COMMANDE DE VOL D'UN AÉRONEF**
VORRICHTUNG ZUR ERZEUGUNG EINER KRAFTEMPFINDUNG DURCH REIBUNG FÜR EIN FLUGSTEUERUNGSSYSTEM EINES LUFTFAHRZEUGS
DEVICE FOR GENERATING FORCE SENSATION, BY FRICTION, FOR A FLIGHT CONTROL SYSTEM OF AN AIRCRAFT

(30) Priorité: 09.10.2017 FR 1759423
(43) Date de publication de la demande: 10.04.2019
(73) Titulaire: Lord Solutions France, 26600 Pont-de-l'Isere (FR)
(72) Inventeur: ROUSSEY, Bastien, 26600 TAIN L'HERMITAGE (FR)
(74) Mandataire: Delorme, Nicolas

(56) Documents cités:
- FR-A- 1 561 160
- GB-A- 283 532
- US-A- 2 686 233
- US-A1- 2003 107 502

## Description

La présente invention concerne un dispositif de génération, par friction, de sensation d'efforts pour un système de commande de vol d'un aéronef. Elle concerne également un système de commande de vol d'un aéronef, comprenant un tel dispositif.

Pour commander le vol d'un aéronef, le pilote de l'aéronef actionne, à la main ou au pied, des commandes de vol manuelles, situées à l'interface homme-machine de l'aéronef. Certaines de ces commandes de vol sont actionnées avec dosage, dans le sens où le pilote dose l'actionnement de ces commandes de vol en fonction de la situation et des paramètres environnementaux. Lorsque la valeur de consigne à donner à de telles commandes de vol n'est pas discrète et que la position de la commande de vol est à maintenir en place une fois que son réglage est dosé par le pilote, il est connu d'associer à la commande de vol un dispositif spécifique qui permet de générer, par friction, une sensation d'efforts : par mise en oeuvre d'une friction mécanique dite « sèche », ce dispositif permet, d'une part, de mémoriser la dernière position choisie par le pilote pour la commande de vol concernée et, d'autre part, d'opposer au pilote un effort significatif à un changement de position de la commande de vol afin de s'assurer que ce changement de position de la commande de vol ne soit due ni à l'environnement, ni à une action accidentelle de la part du pilote.

En pratique, ces dispositifs de génération de sensation d'efforts à friction sont prévus afin que l'effort à fournir pour obtenir un mouvement de la commande de vol soit, autant que possible, indépendant de la vitesse de l'organe d'actionnement animé par le pilote. Plus particulièrement, l'effort statique, ressenti par le pilote et perçu à la mise en mouvement de l'organe d'actionnement, est prévu pour être, autant que possible, proche de l'effort perçu par la main du pilote pendant le déplacement, et ce à différentes vitesses d'actionnement. Par ailleurs, on comprend que la friction mise en oeuvre par ces dispositifs présente une valeur qui est, autant que possible, indépendante de paramètres environnementaux, tels que la température ou le taux d'humidité, ainsi que du nombre de cycles déjà effectués sur la commande de vol concernée, au fil des années d'usage du dispositif.

Pour réaliser un tel dispositif de génération de sensation d'efforts à friction, il est connu de mettre en contact deux surfaces frottantes, plaquées l'une contre l'autre avec un effort donné. En pratique, il peut être prévu une seule paire de deux telles surfaces frottantes, ou bien plusieurs paires de deux telles surfaces frottantes. On recourt généralement à des surfaces frottantes qui sont planes ou cylindriques, pour supporter le glissement générant l'effort de friction. Par exemple, dans une conception existante, un arbre portant au moins un voile frottant est généralement guidé par des paliers et des butées, qui permettent de réaliser une liaison pivot, comme degré de liberté unique, entre cet arbre, lié solidairement à l'organe d'actionnement de la commande de vol, et un châssis à solidariser au bâti de l'aéronef. Dans ce type de conception, l'arbre et l'organe d'actionnement sont guidés en rotation, y compris en l'absence des pièces dont le rôle est de générer le frottement. La limitation axiale de la liaison pivot est généralement faite grâce à l'appui du voile frottant contre un disque frottant fixe, solidaire du châssis. Ce type de montage conduit généralement à une méconnaissance des points de contact entre le voile frottant et le disque frottant : en effet, l'aire de l'interface de contact entre le voile frottant et le disque frottant est généralement beaucoup plus réduite que la surface théorique correspondante. De plus, même si ce type de montage n'est pas hyperstatique, aucun degré de liberté ne permet d'aligner les surfaces frottantes entre elles. Ainsi, dans les dispositifs existants, la pression moyenne exercée à l'endroit des surfaces frottantes est beaucoup plus élevée que celle calculée de manière théorique, sans prise en compte des défauts éventuels de perpendicularité. La mauvaise connaissance de l'interface de contact entre les surfaces frottantes, ainsi que la variabilité de cette interface en fonction des tolérances géométriques associées à chaque pièce du dispositif, aboutit à une inhomogénéité de la pression au niveau de l'interface de contact, cette inhomogénéité conduisant à des usures, ainsi qu'à des risques de dégradation associés aux pressions superficielles mal connues et trop élevées. La performance, notamment en ce qui concerne la valeur de friction en elle-même, et la fiabilité, notamment sur le long terme, s'en trouvent substantiellement dégradées.

L'état de l'art est illustré par le document GB A 283 532.

On notera que les dispositifs de génération de sensation d'efforts, évoqués jusqu'ici ont, comme pièce destinée à être liée solidairement à l'organe d'actionnement de la commande de vol, un arbre qui est rotatif autour d'un axe. Dès lors, ces dispositifs de génération de sensation d'efforts ne doivent pas être confondus avec des mécanismes d'entrainement par levier agissant par friction, dont le fonctionnement repose sur une liaison rotule centrée sur un point unique : dans ces mécanismes d'entrainement, dont des exemples sont fournis par FR A 1 561 160, US A 2 686 233 et US A 2003/107502, le levier est solidaire d'une sphère qui est montée rotulante autour de son centre dans des éléments de support qui sont eux aussi sphériques.

Le but de la présente invention est de proposer un dispositif de génération de sensation d'efforts à arbre rotatif autour d'un axe, qui, tout en étant à friction, soit plus performant et plus fiable.

A cet effet, l'invention a pour objet un dispositif de génération de sensation d'efforts pour un système de commande de vol d'un aéronef, tel que défini à la revendication 1.

Grâce à l'invention, le niveau d'hyper-statisme du dispositif conforme à l'invention est relaxé afin que les surfaces frottantes puissent s'aligner librement les unes avec les autres, sans générer de contraintes d'alignement autres que l'effort axial choisi pour précharger le dispositif. Toujours afin de ne pas sur-contraindre le dispositif conforme à l'invention, des éléments de guidage, tels que des paliers, notamment des paliers à éléments roulants, tels que des roulements à billes, sont avantageusement supprimés. Cette suppression permet de réduire le nombre de pièces, de limiter la masse du dispositif, ainsi que d'augmenter la fiabilité et la disponibilité du dispositif. Les surfaces frottantes prévues dans le dispositif conforme à l'invention héritent ainsi d'une double fonction, à savoir une fonction friction et une fonction guidage. Pour chaque paire de surfaces frottantes, qui sont appuyées l'une contre l'autre, en formant une interface de friction, et qui sont respectivement sphérique et torique, il est généré de la friction par rotulage de la surface torique contre la surface sphérique autour d'un point de rotulage. Les deux points de rotulage du dispositif correspondent aux centres respectifs des surfaces sphériques correspondantes, de sorte que l'axe géométrique passant par ces deux points de rotulage forme un axe de rotation pour la double fonction précitée.

Au sein d'un système de commande de vol d'un aéronef, dans lequel le dispositif conforme à l'invention est intégré, ce dispositif permet avantageusement de produire une sensation d'efforts de type friction constante. Ce type de loi d'effort a pour objectif d'opposer au déplacement d'une commande de vol un effort constant, qui est indépendant de la position et de la vitesse de la commande de vol. Ce dispositif permet avantageusement de produire des efforts les plus indépendants possibles de la température d'utilisation et de l'âge du dispositif, ainsi que du nombre de mouvements déjà effectués par la commande de vol par le passé.

Des caractéristiques additionnelles avantageuses du dispositif conforme à l'invention sont spécifiées aux revendications 2 à 10.

L'invention a également pour objet un système de commande de vol d'un aéronef, tel que défini à la revendication 11.

L'invention sera mieux comprise à la lecture de la description qui va suivre, donnée uniquement à titre d'exemple et faite en se référant aux dessins sur lesquels :
- la figure 1 est une perspective éclatée d'un dispositif conforme à l'invention ; et
- la figure 2 est une coupe selon le plan II de la figure 1, montrant le dispositif à l'état assemblé.

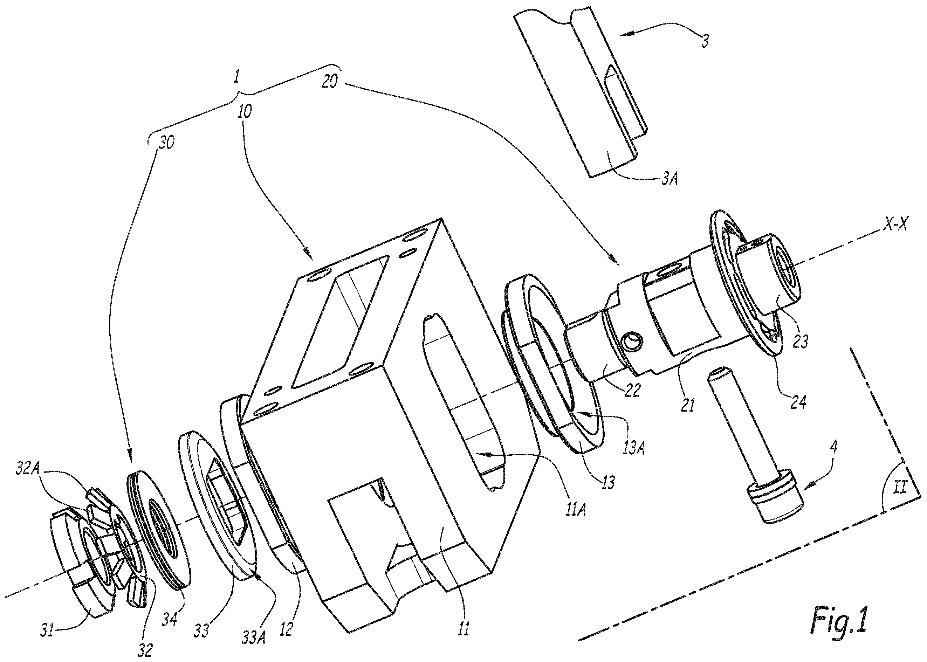

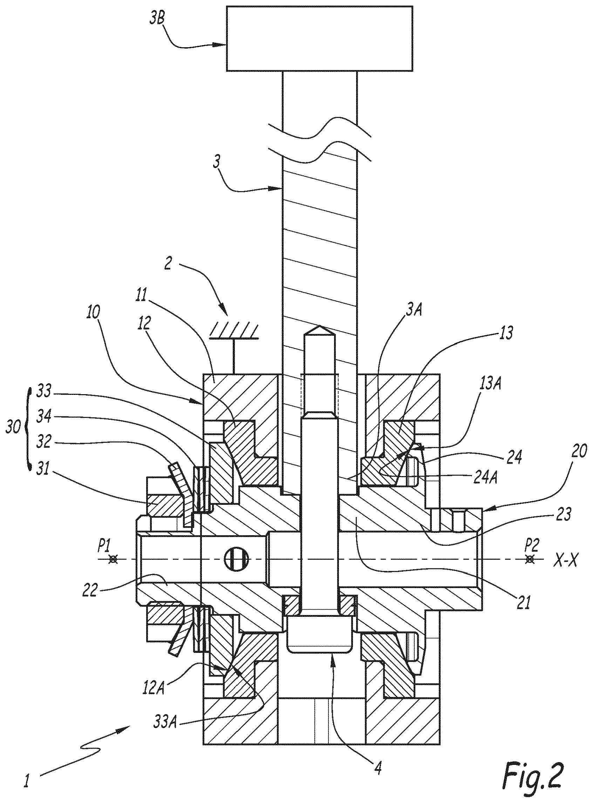

Sur les figures 1 et 2 est représenté un dispositif 1 permettant de générer une sensation d'efforts. En service, le dispositif 1 est intégré à un système de commande de vol d'un aéronef, c'est-à-dire un système permettant de commander un organe de l'aéronef, assurant le pilotage de ce dernier.

Le dispositif 1 comporte un châssis 10, un arbre 20 qui est monté sur le châssis 10 de manière rotative autour d'un axe de rotation X-X, et un dispositif de pré-charge 30 qui est monté sur l'arbre 20 tout en coopérant avec le châssis 10 comme détaillé plus loin.

Le châssis 10 est prévu pour être solidarisé fixement à un bâti 2 de l'aéronef, ce bâti 2 étant indiqué de manière schématique uniquement sur la figure 2. La forme de réalisation de la liaison fixe entre le châssis 10 et la bâti 2 n'est pas limitative de l'invention et ne sera pas détaillée ici plus avant.

Dans l'exemple de réalisation considéré sur les figures, le châssis 10 comporte un corps principal 11, qui est avantageusement aménagé pour être solidarisé fixement au bâti 2 de l'aéronef, et deux bagues 12 et 13 qui sont rapportées fixement au corps principal 11. L'arbre 20 s'étend en travers du corps principal 11 et des bagues 12 et 13, en étant agencé dans un alésage 11A du corps principal 11, qui traverse ce dernier de part en part selon l'axe X-X et dont les débouchés opposés reçoivent respectivement la bague 12 et la bague 13 de manière à, notamment par complémentarité de formes, bloquer les bagues 12 et 13 en rotation autour de l'axe X-X par rapport au corps principal 11 et bloquer en translation axiale les bagues 12 et 13 l'une vers l'autre par rapport au corps principal 11. A l'état assemblé du dispositif 1, une partie intermédiaire 21 de l'arbre 20 est ainsi logée en travers du corps principal 11 et des bagues 12 et 13, tandis qu'une partie latérale 22 de l'arbre 20 émerge de la bague 12 du côté de cette dernière axialement opposé à la bague 13 et qu'une partie latérale 23 de l'arbre 20 émerge de la bague 13 du côté de cette dernière axialement opposé à la bague 12.

La bague 12 délimite, ici sur la face de cette dernière qui est axialement opposée à la bague 13, une surface frottante 12A qui est sphérique en étant centrée sur un point P1. De la même façon, la bague 13 délimite, ici sur sa face qui est axialement opposée à la bague 12, une surface frottante 13A qui est sphérique en étant centrée sur un point P2. Les surfaces frottantes 12A et 13A sont distinctes l'une de l'autre, en étant distantes l'une de l'autre selon l'axe X-X : elles définissent ainsi l'axe X-X dans le sens où cet axe X-X est prévu pour passer par les points P1 et P2 qui sont distincts l'un de l'autre, en étant espacés l'un de l'autre.

En service, c'est-à-dire à l'état assemblé fonctionnel du dispositif 1, l'arbre 20 est lié solidairement en rotation autour de l'axe X-X à une extrémité 3A d'un levier 3 appartenant au système de commande de vol précité. A son extrémité 3B opposée à l'extrémité 3A, le levier 3 est prévu pour être actionné. En pratique, l'extrémité 3B du levier 3, qui n'est montrée que sur la figure 2, peut prendre des formes de réalisation diverses : cette extrémité 3B peut être aménagée pour être liée mécaniquement avec d'autres composants du système de commande de vol, l'extrémité 3B formant alors par exemple une chape, ou bien cette extrémité 3B peut être prévue sous forme d'une poignée de préhension à même d'être directement actionnée par le pilote de l'aéronef. Au niveau de l'extrémité 3A du levier 3, la forme de réalisation de la solidarisation avec l'arbre 20 n'est pas limitative de l'invention : dans l'exemple considéré sur les figures, l'extrémité 3A du levier 3 est rendue mécaniquement solidaire de la partie intermédiaire 21 de l'arbre 20 par l'intermédiaire d'un organe d'assemblage 4 ; à titre de variante non représentée, une forme de réalisation monobloc peut être envisagée.

L'action d'un effort pur ou assimilé pur sur l'extrémité 3B du levier 3 génère un torseur d'effort sur l'axe X-X, que l'on peut décomposer en un couple pur et une réaction de valeur identique à l'effort injecté mais de sens opposé. L'arbre 20 effectue alors un mouvement de rotation autour de l'axe X-X sous l'action d'un tel couple à condition que ce dernier soit supérieur à une résistance qu'opposent, par friction, le châssis 10 et le dispositif de pré-charge 30, comme expliqué ci-après.

Le dispositif de pré-charge 30 comprend un écrou 31 qui est vissé autour de l'axe X-X sur l'arbre 20, notamment, comme ici, sur la partie latérale 22 de cet arbre.

Le dispositif de pré-charge 30 comprend également une rondelle 32 qui est liée en rotation autour de l'axe X-X à l'arbre 20, en étant par exemple clavetée à la partie latérale 22 de l'arbre. La rondelle 32 permet de bloquer en rotation l'écrou 31 par rapport à l'arbre 20 et ainsi de verrouiller une position vissée de l'écrou sur l'arbre : dans l'exemple de réalisation considéré sur les figures, la rondelle 32 inclut à cet effet des languettes 32A sélectivement rabattables dans des échancrures complémentaires 31A de l'écrou 31.

Le dispositif de pré-charge 30 comprend en outre un patin 33 qui est, à la fois, lié en rotation autour de l'axe X-X à l'arbre 20 et monté coulissant selon cet axe X-X sur l'arbre 20 : dans l'exemple de réalisation considéré sur les figures, le patin 33 et la partie latérale 22 de l'arbre 20 coopèrent à cet effet par complémentarité de formes, le patin 33 présentant un alésage non circulaire, à l'intérieur duquel est axialement reçue une section complémentaire de la partie latérale 22 de l'arbre 20.

Le dispositif de pré-charge 30 comprend également un organe élastique 34 qui, en service, est interposé, selon l'axe X-X, entre le patin 33 et l'un et/ou l'autre de l'écrou 31 et de la rondelle 32. Cet organe élastique 34 est prévu élastiquement déformable selon l'axe X-X, de manière à transmettre et renvoyer, axialement de part et d'autre de cet organe élastique 34, les contraintes résultant du vissage de l'écrou 31, en homogénéisant ces contraintes autour de l'axe X-X. Dans l'exemple de réalisation considéré sur les figures, cet organe élastique comprend un ou plusieurs éléments élastiques distincts, qui sont rapportés et empilés entre la rondelle 32 et le patin 33. Dans tous les cas, à l'état assemblé du dispositif 1, le patin 33 est, sous l'effet de l'organe élastique 34 maintenu par la rondelle 32, appuyé axialement contre la bague 12 : plus précisément, sur sa face tournée en service vers cette bague 12, le patin 33 délimite une surface frottante 33A qui est appuyée, selon l'axe X-X, contre la surface frottante 12A de la bague 12, comme bien visible sur la figure 2.

Lors de l'assemblage du dispositif 1, l'écrou 31 est vissé sur l'arbre 20, de manière à régler la poussée axiale que produit cet écrou 31 sur le reste du dispositif 1, ce réglage étant ensuite verrouillé par la rondelle 32. L'écrou 31 et la rondelle 32 poussent axialement sur l'organe élastique 34, qui s'appuie axialement contre eux et qui, à son tour, génère un effort de plaquage du patin 33 contre la bague 12. Par effet de réaction, l'organe élastique 34 repousse l'écrou 31 qui tire alors axialement l'arbre 20 et plaque ainsi également une collerette 24 de cet arbre 20 contre la bague 13, tout en maintenant le patin 33 contre la bague 12.

Dans l'exemple de réalisation considéré sur les figures, la collerette 24 est venue de matière avec la partie latérale 23 de l'arbre 20. En variante, cette collerette 24 peut être formée d'une pièce rapportée et solidarisée fixement à l'arbre 20, notamment à la partie latérale 23 de ce dernier. Dans tous les cas, sur sa face qui, en service, est tournée vers la bague 13, la collerette 24 délimite une surface frottante 24A qui, comme expliqué ci-dessus, est appuyée, sous l'effet du dispositif de pré-charge 30, axialement contre la surface frottante 13A de la bague 13 à l'état assemblé fonctionnel du dispositif 1.

En service, l'appui de la surface frottante 33A, solidaire de l'arbre 20, contre la surface frottante 12A, solidaire du châssis 10, et l'appui de la surface frottante 24A, solidaire de l'arbre 20, contre la surface frottante 13A, solidaire du châssis 10, produisent une friction qui est à surpasser pour mettre l'arbre 20 en rotation autour de l'axe X-X par rapport au châssis 10, moyennant l'actionnement du levier 3 sous l'action d'un couple suffisamment fort, comme indiqué plus haut. Les surfaces frottantes 24A et 33A ne sont pas sphériques, mais sont prévues toriques de manière à, afin de produire cette friction en service, s'appuyer respectivement contre les surfaces frottantes sphériques 13A et 12A en rotulant respectivement autour des points P2 et P1 sur lesquels sont centrées les surfaces frottantes sphériques 13A et 12A. L'interface de contact entre le patin 33 et la bague 12 correspond à une première interface de friction, qui est centrée autour d'une génératrice annulaire qui est un cercle : une fois la condition de contact établie entre la surface frottante torique 33A et la surface frottante sphérique 12A, il ne reste que trois degrés de liberté à la surface frottante torique 33A, qui sont les trois rotations laissées par le rotulage centré sur le point P1, ces trois rotations ne remettant pas en question la nature du contact entre la surface frottante sphérique 12A et la surface frottante torique 33A. De la même façon, l'interface de contact entre la collerette 24 et la bague 13 correspond à une seconde interface de friction, qui est centrée autour d'une génératrice annulaire qui est un cercle : une fois la condition de contact établie entre la surface frottante torique 24A et la surface frottante sphérique 13A, il ne reste que trois degrés de liberté à la surface frottante torique 24A, qui sont les trois rotations laissées par le rotulage centré sur le point P2. L'association des deux surfaces frottantes toriques 33A et 24A, solidaires de l'arbre 20 et ne pouvant rotuler que selon des rotations centrées sur les points P1 et P2 espacés l'un de l'autre, ne laisse qu'un seul degré de liberté à l'arbre 20, à savoir une rotation autour de l'axe X-X passant par les points P1 et P2.

L'iso-statisme ainsi obtenu permet de baisser à la fois le risque de dégradations des pièces frottantes appartenant au dispositif 1, le risque de grippage de ces pièces, ainsi que le coût de ces pièces, puisque celles-ci sont tolérantes aux défauts.

Suivant une disposition avantageuse, qui est mise en œuvre dans l'exemple de réalisation considéré sur les figures, les surfaces frottantes sphériques 12A et 13A sont concaves et, de ce fait, les surfaces frottantes toriques 24A et 33A sont convexes. La capacité d'auto-alignement du dispositif 1 est ainsi renforcée.

Suivant une autre disposition avantageuse, qui est cumulable avec la précédente et qui est également mise en œuvre dans l'exemple de réalisation considéré sur les figures, le petit rayon des surfaces frottantes toriques 24A et 33A est strictement inférieur au rayon des surfaces frottantes sphériques 12A et 13A, tout en ayant une valeur très proche de celle de ce dernier. On entend par « petit rayon », le rayon du cercle dont la rotation autour d'une droite affine, située dans le plan de ce cercle à distance du centre de ce dernier, engendre la surface torique correspondante. En pratique, les surfaces frottantes sphériques 12A et 13A présentent ainsi un rayon valant entre 1,01 et 1,3 fois le petit rayon des surfaces frottantes toriques 24A et 33A. De cette façon, les pressions de Hertz au niveau de chacune des deux interfaces de contact entre les surfaces frottantes 12A, 13A, 24A et 33A sont particulièrement basses.

Par ailleurs, divers aménagements et variantes au dispositif 1 décrit jusqu'ici sont envisageables :
- plutôt que les deux surfaces frottantes sphériques 12A et 13A soient, en service, solidaires du châssis 10 et que les deux surfaces frottantes toriques 24A et 33A soient, en service, solidaires de l'arbre 20, une inversion est possible, c'est-à-dire que, en service, les deux surfaces frottantes sphériques sont solidaires de l'arbre et que les deux surfaces frottantes toriques sont solidaires du châssis ;
- au sein du système de pré-charge 30, d'autres formes de réalisation que l'écrou 31 et la rondelle 32 sont envisageables en tant qu'organe d'appui, qui permet, lors de l'assemblage du dispositif 1, d'être rapporté à l'arbre de manière réglable le long de l'axe X-X et qui permet, en service, d'être à la fois fixe suivant l'axe de rotation sur l'arbre et lié en rotation autour de l'axe de rotation à l'arbre ; et/ou
- également au sein du système de pré-charge 30, l'organe élastique 34 peut présenter d'autres formes de réalisation que l'empilement d'éléments élastiques montré sur les figures ; en particulier, une variante consiste à remplacer cet empilement par un soufflet élastique, qui, en service, est solidaire du patin 33 et de la rondelle 32 et par l'intermédiaire duquel le patin 33 et l'arbre 20 sont liés en rotation autour de l'axe X-X : ce soufflet, qui travaille en torsion entre le patin 33 et la rondelle 32, permet de ne pas lier en rotation le patin et l'arbre directement l'un avec l'autre et donc évite tout jeu angulaire associé à l'anti-rotation entre le patin et l'arbre.

## Revendications

1. Dispositif de génération de sensation d'efforts pour un système de commande de vol d'un aéronef, ce dispositif comprenant :
- un châssis (10) qui est prévu pour être solidarisé fixement à un bâti (2) de l'aéronef,
- un arbre (20) qui est monté sur le châssis (10) de manière rotative autour d'un axe de rotation (X-X),
- deux premières surfaces frottantes (12A et 13A) qui, en service, sont solidaires soit du châssis (10), soit de l'arbre, et
- deux secondes surfaces frottantes (24A et 33A) qui, en service, sont :
- solidaires soit de l'arbre (20) lorsque les premières surfaces frottantes sont solidaires du châssis (10), soit du châssis lorsque les deux premières surfaces frottantes sont solidaires de l'arbre, et
- appuyées respectivement contre les deux premières surfaces frottantes (12A et 13A) selon l'axe de rotation (X-X) de manière à produire une friction qui est à surpasser pour mettre l'arbre en rotation autour de l'axe de rotation par rapport au châssis,
**caractérisé en ce que** les deux premières surfaces frottantes (12A et 13A) sont sphériques en étant respectivement centrées sur des points (P1 et P2) distincts, par lesquels l'axe de rotation (X-X) passe en service, et
**en ce que** les deux secondes surfaces frottantes (24A et 33A) sont toriques de manière à, en service, s'appuyer respectivement contre les deux premières surfaces frottantes (12A et 13A), en rotulant chacune autour du point (P1, P2) sur lequel est centrée la première surface frottante correspondante, pour produire ladite friction.

2. Dispositif suivant la revendication 1, **caractérisé en ce que** les deux premières surfaces frottantes (12A et 13A) sont concaves et les deux secondes surfaces frottantes (24A et 33A) sont convexes.

3. Dispositif suivant l'une des revendications 1 ou 2, **caractérisé en ce que** les deux premières surfaces frottantes (12A et 13A) présentent un rayon qui vaut entre 1,01 et 1,3 fois le petit rayon des deux secondes surfaces frottantes (24A et 33A).

4. Dispositif suivant l'une quelconque des revendications précédentes, **caractérisé en ce que** le dispositif comporte en outre un système de pré-charge (30), qui, en service, est monté sur l'arbre (20) de manière à appuyer les premières et secondes surfaces frottantes (12A, 13A, 24A, 33A) les unes contre les autres pour générer ladite friction.

5. Dispositif suivant la revendication 4, **caractérisé en ce que** l'une (33A) des deux surfaces frottantes (24A et 33A) qui, parmi les premières et secondes surfaces frottantes, sont solidaires de l'arbre (20) en service, est délimitée par le système de pré-charge (30).

6. Dispositif suivant la revendication 5, **caractérisé en ce que** l'autre (24A) des deux surfaces frottantes (24A et 33A) qui, parmi les premières et secondes surfaces frottantes, sont solidaires de l'arbre (20) en service, est délimitée par une collerette (24) de l'arbre.

7. Dispositif suivant l'une des revendications 5 ou 6, **caractérisé en ce que** le système de pré-charge (30) comporte :
- un organe d'appui (31, 32), qui est adapté pour, lors de l'assemblage du dispositif (1), être rapporté à l'arbre (20) de manière réglable le long de l'axe de rotation (X-X) et pour, en service, être à la fois fixe suivant l'axe de rotation sur l'arbre et lié en rotation autour de l'axe de rotation à l'arbre,
- un patin (33), qui est lié en rotation autour de l'axe de rotation (X-X) à l'arbre (20), qui monté coulissant selon l'axe de rotation sur l'arbre, et qui délimite l'une (33A) des deux surfaces frottantes (24A et 33A) qui, parmi les premières et secondes surfaces frottantes, sont solidaires de l'arbre en service, et
- un organe élastique (34) qui, en service, est élastiquement déformable selon l'axe de rotation (X-X) et est axialement interposé entre le patin (33) et l'organe d'appui (31, 32) de manière que la surface frottante (33A) délimitée par le patin (33) est appuyée, sous l'effet de l'organe élastique, contre l'une (12A) des deux surfaces frottantes (12A et 13A) solidaires du châssis (10) en service.

8. Dispositif suivant la revendication 7, **caractérisé en ce que** le patin (33) est lié en rotation autour de l'axe de rotation (X-X) à l'arbre (20) par coopération de formes directement entre le patin et l'arbre.

9. Dispositif suivant la revendication 7, **caractérisé en ce que** l'organe élastique comporte un soufflet qui, en service, est solidaire du patin et de l'organe d'appui, le patin étant lié en rotation autour de l'axe de rotation à l'arbre par l'intermédiaire de ce soufflet.

10. Dispositif suivant l'une quelconque des revendications précédentes, **caractérisé en ce que** les deux surfaces frottantes (12A et 13A) qui, parmi les premières et secondes surfaces frottantes, sont solidaires du châssis (10) en service, sont respectivement délimitées par des bagues (12 et 13), qui sont rapportées à un corps principal (11) du châssis, en étant assemblées axialement de part et d'autre de ce corps principal de manière à, par rapport au corps principal, être bloquées en rotation autour de l'axe de rotation (X-X) et être bloquées en translation axiale l'une vers l'autre.

11. Système de commande de vol d'un aéronef, ce système comprenant :
- un dispositif (1) de génération de sensation d'efforts, conforme à l'une quelconque des revendications précédentes, et
- un levier (3), qui, à une (3A) de ses extrémités (3A et 3B), est lié solidairement en rotation autour de l'axe de rotation (X-X) à l'arbre (20) du dispositif de génération de sensation d'efforts (1), et qui, à son extrémité opposée (3B), est prévu pour être actionné.

## Patentansprüche

1. Vorrichtung zur Erzeugung einer Belastungsempfindung für ein Flugsteuerungssystem eines Luftfahrzeugs, wobei diese Vorrichtung umfasst:
- ein Gestell (10), das vorgesehen ist, um fest an einem Tragrahmen (2) des Luftfahrzeugs fixiert zu werden,
- eine Welle (20), die um eine Drehachse (X-X) drehbar an dem Gestell (10) montiert ist,
- zwei erste Reibflächen (12A und 13A), die im Betrieb entweder mit dem Gestell (10) oder mit der Welle fest verbunden sind, und
- zwei zweite Reibflächen (24A und 33A), die im Betrieb wie folgt sind:
- fest verbunden, entweder mit der Welle (20), wenn die ersten Reibflächen fest mit dem Gestell (10) verbunden sind, oder mit dem Gestell, wenn die beiden ersten Reibflächen fest mit der Welle verbunden sind, und
- jeweils angedrückt an die beiden ersten Reibflächen (12A und 13A) entlang der Drehachse (X-X) um eine Reibung zu erzeugen, die zu überwinden ist, um die Welle in Bezug auf das Gestell in Drehung um die Drehachse zu versetzen,
**dadurch gekennzeichnet, dass** die beiden ersten Reibflächen (12A und 13A) kugelförmig sind, indem sie jeweils auf unterschiedlichen Punkten (P1 und P2) zentriert sind, durch die die Drehachse (X-X) im Betrieb verläuft, und
dadurch, dass die beiden zweiten Reibflächen (24A und 33A) torisch sind, um sich im Betrieb jeweils an die beiden ersten Reibflächen (12A und 13A) anzudrücken, indem jede um den Punkt (P1 und P2) kugelt, auf dem die entsprechende erste Reibfläche zentriert ist, um die Reibung zu erzeugen.

2. Vorrichtung nach Anspruch 1, **dadurch gekennzeichnet, dass** die beiden ersten Reibflächen (12A und 13A) konkav sind und die beiden zweiten Reibflächen (24A und 33A) konvex sind.

3. Vorrichtung nach einem der Ansprüche 1 oder 2, **dadurch gekennzeichnet, dass** die beiden ersten Reibflächen (12A und 13A) einen Radius aufweisen, der zwischen 1,01 und 1,3 Mal dem kleinen Radius der beiden zweiten Reibflächen (24A und 33A) entspricht.

4. Vorrichtung nach einem der vorstehenden Ansprüche, **dadurch gekennzeichnet, dass** die Vorrichtung weiter ein Vorbelastungssystem (30) beinhaltet, das im Betrieb auf der Welle (20) montiert ist, um die erste und zweite Reibfläche (12A, 13A, 24A, 33A) aneinander anzudrücken, um die Reibung zu erzeugen.

5. Vorrichtung nach Anspruch 4, **dadurch gekennzeichnet, dass** die eine (33A) der beiden Reibflächen (24A und 33A), die aus der ersten und zweiten Reibfläche im Betrieb fest mit der Welle (20) verbunden sind, durch das Vorbelastungssystem (30) begrenzt wird.

6. Vorrichtung nach Anspruch 5, **dadurch gekennzeichnet, dass** die andere (24A) der beiden Reibflächen (24A und 33A), die aus der ersten und zweiten Reibfläche im Betrieb fest mit der Welle (20) verbunden sind, durch einen Kragen (24) der Welle begrenzt wird.

7. Vorrichtung nach einem der Ansprüche 5 oder 6, **dadurch gekennzeichnet, dass** das Vorbelastungssystem (30) beinhaltet:
- ein Andrückorgan (31, 32), das angepasst ist, um, bei der Zusammensetzung der Vorrichtung (1) in einstellbarer Weise entlang der Drehachse (X-X) zur Welle (20) hinzugefügt zu werden, und um im Betrieb gleichzeitig entlang der Drehachse auf der Welle feststehend zu sein, und um die Drehachse herum mit der Welle drehverbunden zu sein,
- ein Druckstück (33), das um die Drehachse (X-X) herum mit der Welle (20) drehverbunden ist, entlang der Drehachse auf der Welle verschiebbar montiert ist und das die eine (33A) der beiden Reibflächen (24A und 33A) begrenzt, die aus der ersten und zweiten Reibfläche in Betrieb fest mit der Welle verbunden sind, und
- ein elastisches Organ (34), das im Betrieb entlang der Drehachse (X-X) elastisch verformbar ist und axial zwischen dem Druckstück (33) und dem Andrückorgan (31, 32) eingesetzt ist, sodass die durch das Druckstück (33) begrenzte Reibfläche (33A) unter der Wirkung des elastischen Organs an die eine (12A) der beiden Reibflächen (12A und 13A), die im Betrieb fest mit dem Gestell (10) verbunden sind, angedrückt wird.

8. Vorrichtung nach Anspruch 7, **dadurch gekennzeichnet, dass** das Druckstück (33) durch Zusammenwirken von Formen direkt zwischen dem Druckstück und der Welle um die Drehachse (X-X) herum mit der Welle (20) drehverbunden ist.

9. Vorrichtung nach Anspruch 7, **dadurch gekennzeichnet, dass** das elastische Organ einen Faltenbalg beinhaltet, der im Betrieb fest mit dem Druckstück und dem Andrückorgan verbunden ist, wobei das Druckstück durch diesen Faltenbalg um die Drehachse herum mit der Welle drehverbunden ist.

10. Vorrichtung nach einem der vorstehenden Ansprüche, **dadurch gekennzeichnet, dass** die beiden Reibflächen (12A und 13A), die aus der ersten und zweiten Reibfläche im Betrieb fest mit dem Gestell (10) verbunden sind, jeweils durch Ringe (12 und 13) begrenzt sind, die zu einem Hauptkörper (11) des Gestells hinzugefügt sind, indem sie axial beiderseits dieses Hauptkörpers derart in Bezug auf den Hauptkörper zusammengesetzt sind, dass sie um die Drehachse (X-X) herum in der Drehung blockiert sind, und zueinander in axialer Translation blockiert sind.

11. Flugsteuerungssystem eines Luftfahrzeugs, wobei dieses System umfasst:
- eine Vorrichtung (1) zur Erzeugung einer Belastungsempfindung nach einem der vorstehenden Ansprüche, und
- einen Hebel (3), der an einem (3A) seiner Enden (3A und 3B) um die Drehachse (X-X) herum drehfest mit der Welle (20) der Vorrichtung zur Erzeugung einer Belastungsempfindung (1) verbunden ist, und der an seinem entgegengesetzten Ende (3B) zur Betätigung vorgesehen ist.

## Claims

1. A device for generating a force sensing for a flight control system of an aircraft, this device comprising:
- a chassis (10) which is provided for being securely fixed to a frame (2) of the aircraft,
- a shaft (20) which is mounted in rotation on the chassis (10) about an axis of rotation (X-X),
- two first frictional surfaces (12A and 13A) which, in service, are secured either to the chassis (10) or to the shaft, and
- two second frictional surfaces (24A and 33A) which, in service, are:
- secured either to the shaft (20) when the first frictional surfaces are secured to the chassis (10), or to the chassis when the two first frictional surfaces are secured to the shaft, and
- bearing respectively against the two first frictional surfaces (12A and 13A) along the axis of rotation (X-X) so as to produce a friction which is to be surpassed to put the shaft in rotation about the axis of rotation relative to the chassis,
**characterized in that** the two first frictional surfaces (12A and 13A) are spherical by being respectively centered on distinct points (P1 and P2), by which the axis of rotation (X-X) passes into service,
and **in that** the two second frictional surfaces (24A and 33A) are toroidal so as, in service, to respectively bear against the two first frictional surfaces (12A and 13A), by swiveling each about the point (P1, P2) on which is centered the corresponding first frictional surface, to produce said friction.

2. The device according to claim 1, **characterized in that** the two first frictional surfaces (12A and 13A) are concave and the two second frictional surfaces (24A and 33A) are convex.

3. The device according to any of claims 1 or 2, **characterized in that** the two first friction surfaces (12A and 13A) have a radius which is between 1.01 and 1.3 times the small radius of the two second friction surfaces (24A and 33A).

4. The device according to any one of the preceding claims, **characterized in that** the device further includes a pre-load system (30), which, in service, is mounted on the shaft (20) so as to bear the first and second frictional surfaces (12A, 13A, 24A, 33A) against each other to generate said friction.

5. The device according to claim 4, **characterized in that** one (33A) of the two frictional surfaces (24A and 33A) which, among the first and second frictional surfaces, are secured to the shaft (20) in service, is delimited by the pre-load system (30).

6. The device according to claim 5, **characterized in that** the other (24A) of the two frictional surfaces (24A and 33A) which, among the first and second frictional surfaces, are secured to the shaft (20) in service, is delimited by a flange (24) of the shaft.

7. The device according to any of claims 5 or 6, **characterized in that** the pre-load system (30) includes:
- a bearing member (31,32), which is suitable, when assembling the device (1), to be attached to the shaft (20) in an adjustable manner along the axis of rotation (X-X) and, in service, to be both fixed on the shaft along the axis of rotation and linked in rotation to the shaft about the axis of rotation,
- a skid (33), which is linked in rotation about the axis of rotation (X-X) to the shaft (20), which is slidably mounted along the axis of rotation on the shaft, and which delimits one (33A) of the two frictional surfaces (24A and 33A) which, among the first and second frictional surfaces, are secured to the shaft in service, and
- an elastic member (34) which, in service, is elastically deformable along the axis of rotation (X-X) and is axially interposed between the skid (33) and the bearing member (31, 32) so that the frictional surface (33A) delimited by the skid (33) is borne, under the effect of the elastic member, against one (12A) of the two frictional surfaces (12A and 13A) and secured to the chassis (10) in service.

8. The device according to claim 7, **characterized in that** the skid (33) is linked in rotation about the axis of rotation (X-X) to the shaft (20) in a form-fitting manner directly between the skid and the shaft.

9. The device according to claim 7, **characterized in that** the elastic member includes a bellows which, in service, is secured to the skid and the bearing member, the skid being linked in rotation about the axis of rotation to the shaft via this bellows.

10. The device according to any one of the preceding claims, **characterized in that** the two frictional surfaces (12A and 13A) which, among the first and second frictional surfaces, are secured to the chassis (10) in service, are respectively delimited by rings (12 and 13), which are related to a main body (11) of the chassis, by being axially assembled on both sides of this main body so as, relative to the main body, to be blocked in rotation about the axis of rotation (X-X) and to be blocked in axial translation one towards the other.

11. A system for controlling a flight of an aircraft, this system comprising:
- a device (1) for generating a force sensing, in accordance with any one of the preceding claims, and
- a lever (3), which, at one (3A) of its ends (3A and 3B), is securely linked in rotation about the axis of rotation (X-X) to the shaft (20) of the force sensing generating device (1), and which, at its opposite end (3B), is provided for being actuated.
